# EUROPÄISCHE PATENTSCHRIFT

(11) **EP 1 554 152 B1**
(45) Veröffentlichungstag und Bekanntmachung des Hinweises auf die Patenterteilung: **02.04.2008**
(21) Anmeldenummer: 03809303.5
(22) Anmeldetag: 22.10.2003
(51) Int. Cl.: B60W 10/02, B60W 10/10, F16H 61/04

(54) **VERFAHREN ZUR STEUERUNG EINES ANTRIEBSSTRANGS MIT EINER AUTOMATISIERTEN KUPPLUNG**
METHOD FOR CONTROLLING A DRIVE TRAIN COMPRISING AN AUTOMATIC CLUTCH
PROCEDE POUR COMMANDER UNE CHAINE CINEMATIQUE COMPRENANT UN EMBRAYAGE SEMI-AUTOMATIQUE

(30) Priorität: 26.10.2002 DE 10249951
(43) Veröffentlichungstag der Anmeldung: 20.07.2005
(73) Patentinhaber: Daimler AG, 70327 Stuttgart (DE)
(72) Erfinder: GUGGOLZ, Manfred, 71277 Rutesheim (DE); HILLENBRAND, Werner, 72639 Neuffen (DE); LIU, Xiaoyi, 71364 Winnenden (DE); SCHNITZER, Detlef, 73770 Denkendorf (DE); VEIT, Markus, 72124 Pliezhausen (DE)
(86) Internationale Anmeldenummer: PCT/EP2003/011691
(87) Internationale Veröffentlichungsnummer: WO 2004/037590

(56) Entgegenhaltungen:
- EP-A- 0 676 566
- WO-A-02/060715
- US-A- 5 441 462
- US-A- 6 123 643

## Beschreibung

Die Erfindung betrifft ein Verfahren zum Betrieb eines Antriebsstrangs eines Kraftfahrzeugs nach dem Oberbegriff des Anspruchs 1.

In der EP 0 695 665 A1 ist ein Verfahren zum Betrieb eines Antriebsstrangs eines Kraftfahrzeugs mit einem automatisierten Getriebe in Form eines Automatikgetriebes beschrieben. Das Getriebe kann mittels einer automatisierten Kupplung mit einer Antriebsmaschine in Form eines Motors verbunden werden. Bei jedem Gangwechsel des Getriebes wird die Kupplung geöffnet und nach Abschluß des Gangwechsels wieder geschlossen. Dies führt zu einem starken Verschleiß an der Kupplung, insbesondere, wenn der Antriebsstrang in einem Nutzfahrzeug mit großer Fahrzeugmasse und hohen Laufleistungen eingesetzt wird.

In der EP 0 676 566 A1 ist ein Verfahren zum Betrieb eines Antriebsstrangs eines Kraftfahrzeugs mit einem automatisierten Getriebe beschrieben. Das Getriebe kann mittels einer fußkraftbetätigten oder einer automatisierten Kupplung mit einer Antriebsmaschine in Form eines Verbrennungsmotors verbunden werden. Bei dem beschriebenen Verfahren werden Gangwechsel des Getriebes von einem Ursprungs- in einen Zielgang bei geschlossener Kupplung durchgeführt. Die Synchronisation einer Drehzahl einer Getriebeeingangswelle auf eine Zieldrehzahl im Zielgang erfolgt mittels einer Beeinflussung der Antriebsmaschine. Bei Anforderung einer Hochschaltung, beispielsweise durch den Fahrzeugführer, wird auf Basis von aktuell erfaßten Fahrzeugbetriebsbedingungen bestimmt, ob die angeforderte Hochschaltung durchführbar ist. Lediglich durchführbare Gangwechsel werden ausgelöst, Anforderungen für nicht durchführbare Gangwechsel werden abgewandelt oder gelöscht. Damit werden eine Vielzahl von Gangwechseln, welche mit geöffneter Kupplung durchführbar wären, nicht ausgeführt.

In der gattunsbildenden WO 02/060715 A1 ist ein Verfahren zum Betrieb eines Antriebsstrangs eines Kraftfahrzeugs beschrieben, bei welchem bei jedem Gangwechsel in Abhängigkeit von gemessenen Betriebsgrößen des Kraftfahrzeugs entschieden wird, ob eine Kupplung während des Gangwechsels geöffnet wird oder geschlossen bleibt. Bei einem Gangwechsel mit geschlossener Kupplung erfolgt die Synchronisation einer Drehzahl einer Getriebeeingangswelle auf eine Zieldrehzahl im Zielgang ebenfalls mittels einer Beeinflussung der Antriebsmaschine.

Demgegenüber ist es die Aufgabe der Erfindung, ein Verfahren zum Betrieb eines Antriebsstrangs vorzuschlagen, mittels welchem ein zuverlässiger Betrieb des Antriebsstrangs ermöglicht wird.

Erfindungsgemäß wird die Aufgabe durch ein Verfahren nach Anspruch 1 gelöst.

Ein Antriebsstrang eines Kraftfahrzeugs verfügt über eine Antriebsmaschine, beispielsweise in Form eines Verbrennungsmotors, und ein automatisiertes Zahnräderwechselgetriebe, welches mittels einer automatisierten Kupplung mit der Antriebsmaschine verbunden werden kann. Die Kupplung kann beispielsweise als eine Reibungskupplung ausgeführt und von einem Stellglied betätigbar sein. Bei einem automatisierten Zahnräderwechselgetriebe sind Schaltelemente mittels Stellgliedern betätigbar. Das Zahnräderwechselgetriebe ist insbesondere als ein unsynchronisiertes Getriebe ausgeführt und kann über ein Vorschaltgetriebe, beispielsweise eine Splitgruppe, und ein Nachschaltgetriebe, beispielsweise eine Rangegruppe, verfügen.

Die Antriebsmaschine verfügt über Stellglieder, welche von einer Steuerungseinrichtung angesteuert werden. Beispielsweise kann die Steuerungseinrichtung eine Einspritzmenge eines Kraftstoffs, einen Zündzeitpunkt oder den Einsatz von sogenannten Motorbremsen, beispielsweise in Form einer Auspuffklappe oder einer Konstantdrossel, vorgeben. Die Stellglieder des Zahnräderwechselgetriebes und der Kupplung können auch von der genannten Steuerungseinrichtung oder von einer weiteren Steuerungseinrichtung angesteuert werden. Die Steuerungseinrichtungen stehen dabei in Signalverbindung.

Die Steuerungseinrichtung des Zahnräderwechselgetriebes nimmt in Abhängigkeit von Auswahlregeln und von Fahrzeugparametern und / oder Betriebsgrößen des Kraftfahrzeugs eine Auswahl vor, ob bei einem Gangwechsel die Kupplung geöffnet wird oder geschlossen bleibt.

Wenn Gangwechsel von einem Ursprungsgang in einen Zielgang des Zahnräderwechselgetriebes mit geschlossener Kupplung durchgeführt werden, erfolgt nach dem Auslegen des Ursprungsgangs, wenn also keine Verbindung mehr zwischen einer Eingangs- und einer Ausgangswelle des Zahnräderwechselgetriebes besteht, eine Synchronisation einer Drehzahl der Getriebeeingangswelle auf eine Zieldrehzahl im Zielgang, der sogenannten Synchrondrehzahl, mittels einer Beeinflussung der Antriebsmaschine. Bei Synchrondrehzahl haben Schaltelemente des Zielgangs, welche zum einen mit der Getriebeeingangswelle und zum anderen mit der Getriebeausgangswelle und damit mit angetriebenen Fahrzeugrädern verbunden sind, die selbe Drehzahl. Bei Rückschaltungen wird dazu von der Steuerungseinrichtung der Antriebsmaschine eine Drehmoment angefordert, mittels welchem die Drehzahl der Antriebsmaschine und damit auch die Drehzahl der Getriebeeingangswelle erhöht wird. Bei Hochschaltungen wird ein sehr geringes oder ein negatives, ein sogenanntes Schubmoment, angefordert, um die Drehzahl der Getriebeeingangswelle zu verringern. Um dies zu unterstützen, können auch die genannten Motorbremsen oder weitere, nicht zur Antriebsmaschine gehörende Verzögerungsmittel, beispielsweise eine Getriebebremse, angesteuert werden.

Gangwechsel können dabei sowohl von einem Fahrzeugführer mittels einer geeigneten Betätigungseinrichtung, beispielsweise einem Schalthebel, oder von der Steuerungseinrichtung des Zahnräderwechselgetriebes angefordert werden.

Es können auch Gangwechsel mit offener Kupplung durchgeführt werden. Bei offener Kupplung kann kein Drehmoment von der Getriebeeingangs- auf die Getriebeausgangswelle übertragen werden. Dazu ist es nicht notwendig, daß ein Betätigungsweg der Kupplung komplett durchfahren wurde.

Damit kann jeder Gangwechsel mit einem bezüglich der Betriebsbedingungen des Kraftfahrzeugs geeigneten Kupplungszustand durchgeführt werden. Damit ist ein zuverlässiger Betrieb des Antriebsstrangs, bei welchem angeforderte Gangwechsel des Zahnräderwechselgetriebes sicher ausgeführt werden, gewährleistet. Gleichzeitig wird ein geringer Verschleiß an der Kupplung und damit ein kostengünstiger Betrieb des Kraftfahrzeugs ermöglicht.

Außerdem sind bei geöffneter Kupplung so Gangwechsel möglich, bei denen die Drehzahl der Antriebsmaschine im Zielgang kleiner als die sogenannte Standgasdrehzahl ist, also die Drehzahl, die sich ohne Eingriff des Fahrzeugführers im Stand im Leerlauf einstellt. Dies kann beispielsweise vor dem Einfahren in eine starke Steigung oder ein starkes Gefälle von Vorteil sein.

Erfindungsgemäß werden in einer fest vorgegebenen Zeitspanne nach einer Erstinbetriebnahme des Antriebsstrangs und / oder bei einer erkannten Fehlfunktion einer Komponente des Antriebsstrangs Gangwechsel ausschließlich mit geöffneter Kupplung durchgeführt. Nach einer Erstinbetriebnahme des Antriebsstrangs werden insbesondere Hochschaltungen mit geöffneter Kupplung durchgeführt.

Unter einer Erstinbetriebnahme wird dabei die Inbetriebnahme des Antriebsstrangs nach der Herstellung des Kraftfahrzeugs oder die Inbetriebnahme nach einem Tausch eines Elements, beispielsweise der Antriebsmaschine, des Antriebsstrangs verstanden. Die Zeitspanne ist dabei fest vorgegeben.

Bei einer Erstinbetriebnahme oder nach einem Start der Antriebsmaschine sind nicht alle Fahrzeugparameter, welche bei der genannten Auswahl und der genannten Prüfung berücksichtigt werden, bekannt. Beispielsweise können bei einer Erstinbetriebnahme die Verlaufsparameter der Drehzahl der Antriebsmaschine unbekannt sein. Diese können dann gemessen und in einer Steuerungseinrichtung abgespeichert werden. Nach einem Motorstart kann sich beispielsweise das Fahrzeuggewicht durch eine geänderte Zuladung sehr stark geändert haben. Dies ist insbesondere bei Nutzfahrzeugen der Fall, bei welchen die Zuladung ein Leergewicht des Fahrzeugs weit übertreffen kann.

Solange die Fahrzeugparameter nicht bestimmt sind, kann keine gesicherte Auswahl durchgeführt werden. Damit wird in dieser Phase durch Gangwechsel mit offener Kupplung ein gesicherter Betrieb des Kraftfahrzeugs gewährleistet.

Bei einer erkannten Fehlfunktion einer Komponente des Antriebsstrangs werden ebenfalls Gangwechsel mit offener Kupplung durchgeführt. Beispielsweise kann die Steuerungseinrichtung der Antriebsmaschine einen Defekt erkannt haben und daraufhin nur noch einen Notbetrieb der Antriebsmaschine gewährleisten. Weiterhin kann beispielsweise eine Motorbremse so schwergängig sein, daß der Betrieb der Motorbremse nicht mehr oder nur sehr eingeschränkt möglich ist.

Das Verhalten der fehlerhaften Komponente bei einem Gangwechsel ist damit nicht mehr vorhersagbar. Somit kann keine gesicherte Prüfung und Auswahl durchgeführt werden. Damit wird bei erkannter Fehlfunktion einer Komponente durch Gangwechsel mit offener Kupplung ein gesicherter Betrieb des Kraftfahrzeugs gewährleistet.

In Ausgestaltung der Erfindung nimmt die Steuerungseinrichtung in Abhängigkeit von Prüfregeln eine Prüfung vor, ob ein angeforderter Gangwechsel bei geschlossener Kupplung durchführbar ist. Die Auswahl, ob die Kupplung bei dem Gangwechsel geöffnet wird oder geschlossen bleibt, ist vom Ergebnis der Prüfung abhängig. Insbesondere werden alle mit geschlossener Kupplung möglichen Gangwechsel auch so ausgeführt. Damit wird eine möglichst große Zahl von Gangwechseln mit geschlossener Kupplung durchgeführt, was zu einem besonders geringen Verschleiß an der Kupplung führt.

In Ausgestaltung der Erfindung ist die Prüfung in Abhängigkeit von Fahrzeugparametern und / oder Betriebsgrößen des Kraftfahrzeugs durchführbar. Fahrzeugparameter des Kraftfahrzeugs beschreiben den allgemeinen Zustand des Kraftfahrzeugs, beispielsweise:
- ein Fahrzeuggewicht,
- ein Luftwiderstandsbeiwert und eine Stirnfläche,
- Rollwiderstandskoeffizienten der Fahrzeugreifen,
- Verlaufsparameter der Drehzahl der Antriebsmaschine beim Synchronisieren während eines Gangwechsels, beispielsweise ein maximaler positiver und negativer Gradient oder
- ein Allgemeinzustand der Motorbremsen, beispielsweise leicht- oder schwergängig.

Betriebsgrößen beschreiben den Zustand des Kraftfahrzeugs zu einem bestimmten Zeitpunkt, beispielsweise wenn ein Gangwechsel angefordert wird. Betriebsgrößen sind beispielsweise:
- die Drehzahl der Antriebsmaschine,
- das Drehmoment der Antriebsmaschine,
- eine Stellung eines Leistungsanforderungselements, beispielsweise eines Fahrpedals,
- ein Zustand der Motorbremsen, beispielsweise aktiv oder inaktiv,
- der Ursprungsgang.

Die Fahrzeugparameter und die Betriebsgrößen können teilweise direkt mittels Sensoren erfaßt, in besonderen Betriebssituationen gemessen oder mittels geeigneter Berechnungsverfahren aus gemessenen Größen ermittelt werden.

Damit kann das Verhalten des Kraftfahrzeugs, beispielsweise der Verlauf der Fahrzeuggeschwindigkeit oder der Drehzahl der Antriebsmaschine, während eines Gangwechsels, insbesondere für die Zeitspanne, in der die Antriebsmaschine nicht mit den Fahrzeugrädern verbunden ist, vorausbestimmt werden. Unter Berücksichtigung dieser Größen kann die Prüfung, ob ein Gangwechsel mit geschlossener Kupplung durchführbar ist, genau erfolgen. Die Gefahr, daß die Prüfung ein falsches Ergebnis liefert, ist damit gering.

Bei der Auswahl, ob ein Gangwechsel mit offener oder geschlossener Kupplung durchgeführt wird, kann damit gewährleistet werden, daß die angeforderten Gangwechsel durchführbar sind.

In Ausgestaltung der Erfindung werden die Auswahl und / oder die Prüfung zumindest in Teilbetriebsbereichen in Abhängigkeit vom Zielgang des Zahnräderwechselgetriebes durchgeführt.

Damit wird die Gefahr, daß die Prüfung, ob ein Gangwechsel mit geschlossener Kupplung durchführbar ist, falsche Ergebnisse liefert, besonders gering.

Beispielsweise wird bei einer Hochschaltung die Drehzahl der Antriebsmaschine und damit die Drehzahl der Getriebeeingangswelle mittels des Bremsmoments, welches die Antriebsmaschine aufbringt, in Richtung Synchrondrehzahl verzögert. Das Bremsmoment wird aufgebaut, indem nur wenig oder kein Kraftstoff eingespritzt wird. Zusätzlich kann das Bremsmoment durch den Einsatz von Motorbremsen verstärkt werden. Die Synchrondrehzahl ergibt sich aus der Geschwindigkeit des Kraftfahrzeugs und dem Zielgang unter Berücksichtigung von weiteren Übersetzung, beispielsweise einer Hinterachse, im Antriebsstrang. Damit ändert sich die Synchrondrehzahl bei sich ändernder Fahrzeuggeschwindigkeit. Um die Synchrondrehzahl zu erreichen, muß daher der Gradient der Drehzahl der Antriebsmaschine deutlich größer sein, als der Gradient der Synchrondrehzahl. Die Gefahr, daß dies nicht der Fall ist, ist vor allem bei einem hohen Fahrzeuggewicht und damit bei einer starken Verzögerung des Kraftfahrzeugs bei ausgelegtem Gang, d.h. ohne Antriebsmoment, gegeben. Bei einer Prüfung, ob der Gangwechsel mit geschlossener Kupplung durchführbar ist, in Abhängigkeit von den genannten Fahrzeugparametern und / oder Betriebsgrößen, kann eine aus der Fahrzeugmasse bestimmte Verzögerung des Kraftfahrzeugs mit einem maximalen negativen Gradienten der Drehzahl der Antriebsmaschine verglichen werden. Somit ist eine genaue Vorausberechnung, ob die vom Zielgang abhängige Synchrondrehzahl erreicht werden und damit die Schaltung mit geschlossener Kupplung durchgeführt werden kann, möglich.

In Ausgestaltung der Erfindung werden die Auswahl und / oder die Prüfung zumindest in Teilbetriebsbereichen in Abhängigkeit von Größen, welche die Umwelt des Kraftfahrzeugs beschreiben, durchgeführt werden. Diese Größen sind beispielsweise:
- Neigung der Fahrbahn,
- Beschaffenheit der Fahrbahn, beispielsweise befestigte Straße, Schotter oder Matsch,
- Umgebungstemperatur,
- geodätische Höhe oder
- Umgebungsdruck.

Diese Größen können teilweise direkt mittels Sensoren erfaßt, in besonderen Betriebssituationen gemessen oder mittels geeigneter Berechnungsverfahren ermittelt werden. Einige Größen, wie beispielsweise Neigung der Fahrbahn, können auch von einem an sich bekannten Navigationssystem mit digitaler Straßenkarte zur Verfügung gestellt werden.

Damit kann die Vorausberechnung des Verhaltens des Kraftfahrzeugs bei einem Gangwechsel und somit auch die genannte Prüfung besonders genau vorgenommen werden.

In Ausgestaltung der Erfindung sind die Fahrzeugparameter veränderbar. Die Fahrzeugparameter können in ausgewählten Betriebsbereichen des Kraftfahrzeugs bestimmt und mit gespeicherten Parametern verglichen werden. Bei Abweichungen können neue Parameterwerte berechnet und gespeichert werden, also eine sogenannte Adaption durchgeführt werden. Die neu gespeicherten Parameterwerte werden dann bei der Auswahl und der Prüfung berücksichtigt.

Es können Parameter adaptiert werden, welche sich sehr schnell ändern können, wie beispielsweise das Fahrzeuggewicht. Weiterhin können Parameter adaptiert werden, welche sich vor oder bei einer Erstinbetriebnahme nicht exakt festlegen lassen, wie beispielsweise Verlaufsparameter der Drehzahl der Antriebsmaschine. Die Verlaufsparameter, beispielsweise die maximalen Gradienten der Drehzahl, sind von Antriebsmaschine zu Antriebsmaschine verschieden und können sich auch noch über einen längeren Zeitraum hin ändern. Daher müssen aus Sicherheitsgründen als Startwerte für die Adaption ungünstige Werte angenommen werden, beispielsweise nur kleine mögliche Gradienten der Drehzahl der Antriebsmaschine. Damit kann die Prüfung fälschlicherweise das Ergebnis liefern, daß ein angeforderter Gangwechsel nicht mit geschlossener Kupplung durchführbar ist, obwohl dies mit den tatsächlichen Fahrzeugparametern möglich wäre. Durch die Adaption nähern sich die gespeicherten Werte immer mehr den tatsächlichen Werten an, so daß immer mehr Schaltungen mit geschlossener Kupplung durchgeführt werden können.

Damit wird ein besonders verschleißarmer Betrieb des Kraftfahrzeugs ermöglicht.

In Ausgestaltung der Erfindung verfügt das Zahnräderwechselgetriebe über eine von der Steuerungseinrichtung ansteuerbare Synchronisiereinrichtung, mittels welcher eine Getriebeeingangswelle abgebremst werden kann und die Steuerungseinrichtung wählt bei Hochschaltungen mit geöffneter Kupplung aus, ob die Synchronisiereinrichtung angesteuert und damit die Getriebeeingangswelle abgebremst wird oder ob eine Ansteuerung unterbleibt. Die Synchronisiereinrichtung kann beispielsweise als eine an sich bekannte Getriebebremse ausgeführt sein, welche direkt auf die Getriebeeingangswelle oder auf eine Vorgelegewelle wirkt.

Damit wird gewährleistet, daß die Getriebeeingangswelle bei Hochschaltungen mit geöffneter Kupplung auch bei sich stark ändernder Fahrzeuggeschwindigkeit die Synchrondrehzahl des Zielgangs sicher und schnell erreicht. Damit werden schnelle Hochschaltungen ermöglicht und ein sicherer Betrieb des Kraftfahrzeugs gewährleistet.

In Ausgestaltung der Erfindung bleibt beim Beginn von Rückschaltungen die Kupplung geschlossen und die Steuerungseinrichtung steuert ein Stellglied zum Auslegen des Ursprungsgangs an. Anschließend ermittelt die Steuerungseinrichtung eine Zeit seit Ansteuerung des Stellglieds und überwacht, ob der Ursprungsgang ausgelegt wird. Ist dies der Fall, so wird der Gangwechsel mit geschlossener Kupplung durchgeführt. Falls die ermittelte Zeit seit Ansteuerung des Stellglieds eine Schwelle überschreitet, ohne daß der Ursprungsgang ausgelegt wurde, öffnet die Steuerungseinrichtung die Kupplung und der Gangwechsel wird mit geöffneter Kupplung durchgeführt.

Um einen Gang auslegen zu können, darf von zugehörigen Schaltelementen, beispielsweise einer Schiebemuffe, kein oder nur ein sehr geringes Drehmoment übertragen werden. Dies kann zum einen dadurch erreicht werden, daß die Kupplung geöffnet wird oder, bei geschlossener Kupplung, das abgegebene Drehmoment der Antriebsmaschine gezielt geändert wird. Befindet sich das Kraftfahrzeug im Zugbetrieb, so muß das Drehmoment reduziert werden; im Schubbetrieb ist eine Drehmomenterhöhung notwendig. Ändert sich zum Zeitpunkt des gewünschten Auslegens die Fahrzeuggeschwindigkeit, so muß die Antriebsmaschine gegen die aufgezwungene Drehzahländerung der Getriebeausgangs- und Eingangswelle den genannten Zustand am Schaltelement des Ursprungsgangs einstellen. Dies ist nur möglich, wenn die Dynamik der Antriebsmaschine größer ist als die Dynamik des Kraftfahrzeugs. Beispielsweise ist eine starke Fahrzeugverzögerung bei gleichzeitig angeforderter Rückschaltung diesbezüglich besonders kritisch.

Mit dem erfindungsgemäßen Verfahren können auch in kritischen Situationen angeforderte Schaltungen sicher durchgeführt werden. Außerdem ist für einen möglichst großen Anteil von Gangwechseln mit geschlossener Kupplung keine genaue Kenntnis der Fahrzeugparameter, der Betriebsgrößen oder der Umweltgrößen notwendig. Somit kann ein verschleißarmer und sicherer Betrieb des Kraftfahrzeugs gewährleistet werden, wenn die genannten Größen nicht ermittelbar oder noch nicht ermittelt wurden.

Weitere Vorteile der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. In der Zeichnung zeigen:
- Fig. 1: einen Antriebsstrang eines Kraftfahrzeug mit einem automatisierten Zahnräderwechselgetriebe in einer schematischen Darstellung,
- Fig. 2: ein Ablaufdiagramm eines Gangwechsels,
- Fig. 3a, 3b: jeweils ein Diagramm zur zeitlichen Darstellung von Betriebsgrößen des Kraftfahrzeugs bei einer Hochschaltung des Zahnräderwechselgetriebes und
- Fig. 4: ein Ablaufdiagramm einer Rückschaltung in einer zweiten Ausführungsform.

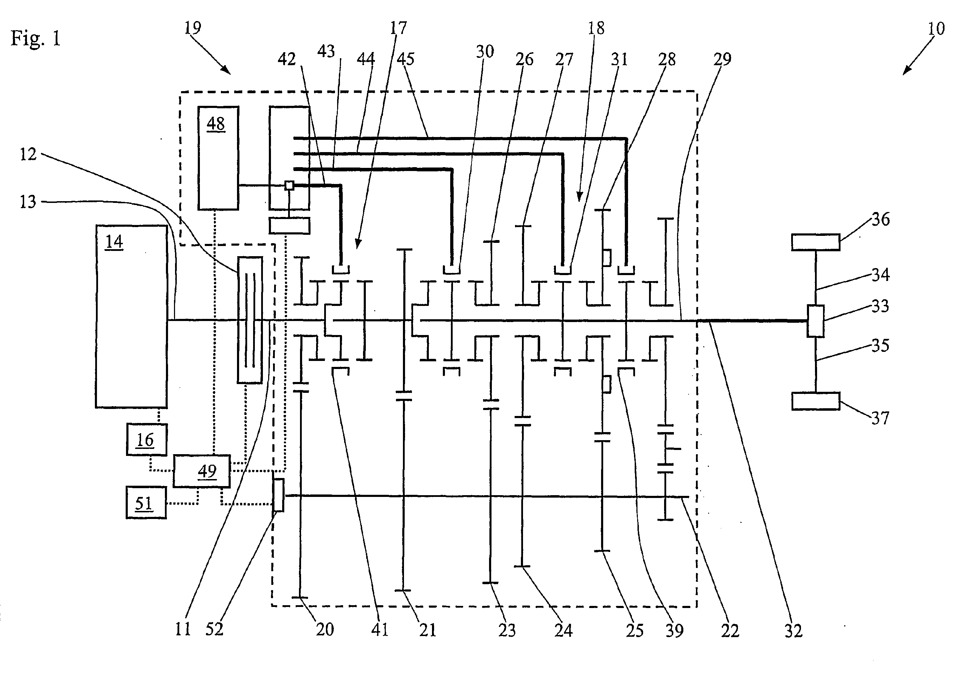

Gemäß Fig. 1 weist ein Antriebsstrang 10 eines nicht dargestellten Kraftfahrzeugs eine Antriebsmaschine 14 auf, welche von einer Steuerungseinrichtung 16 angesteuert wird. Die Steuerungseinrichtung 16 steht mit nicht dargestellten Stellgliedern, beispielsweise für eine nicht dargestellte Auspuffklappe der Antriebsmaschine 14, in Signalverbindung. Damit kann die Steuerungseinrichtung 16 Stellgrößen an die Stellglieder der Antriebsmaschine 14 senden. Außerdem steht die Steuerungseinrichtung 16 in Signalverbindung mit nicht dargestellten Sensoren, wie beispielsweise einem Drehzahlsensor oder einem Temperatursensor, mittels welchen Betriebsgrößen der Antriebsmaschine 14 erfaßbar sind.

Die Antriebsmaschine 14 kann mittels einer Ausgangswelle 13 und einer Reibungskupplung 12 mit einer koaxial zur Ausgangswelle 13 angeordneten Eingangswelle 11 eines automatisierten, unsynchronisierten Zahnräderwechselgetriebes 19, eines sogenannten Klauengetriebes, verbunden werden. Die Kupplung 12 und das Zahnräderwechselgetriebe 19 werden von einer Steuerungseinrichtung 49 angesteuert. Die Steuerungseinrichtung 49 steht in Signalverbindung mit nicht dargestellten Stellgliedern und Sensoren der Kupplung 12 und des Zahnräderwechselgetriebes 19. Damit kann die Steuerungseinrichtung 49 die Kupplung 12 öffnen oder schließen und Gangwechsel im Zahnräderwechselgetriebe 19 durchführen. Mittels der Sensoren sind Betriebsgrößen wie Drehzahlen oder Temperaturen der Kupplung 12 und des Zahnräderwechselgetriebes 19 erfaßbar. Außerdem steht die Steuerungseinrichtung 49 in Signalverbindung mit der Steuerungseinrichtung 16, wodurch ein Austausch von Daten, beispielsweise von Betriebsgrößen der Antriebsmaschine 14 oder des Zahnräderwechselgetriebes 19, sowie eine Anforderung von Drehzahländerungen der Antriebsmaschine 14, welche dann von der Steuerungseinrichtung 16 umgesetzt werden, möglich sind. Die Steuerungseinrichtung 49 ist außerdem mit einer Bedieneinheit 51 verbunden, mittels welcher ein Fahrzeugführer Gangwechsel des Zahnräderwechselgetriebes 19 anfordern kann. Alternativ dazu können Gangwechsel von einem Ursprungs- in einen Zielgang auch in an sich bekannter Weise von der Steuerungseinrichtung 49 ausgelöst werden. Die Ermittlung des Zielgangs ist dabei unter anderem von der Geschwindigkeit des Kraftfahrzeugs und einem Betätigungsgrad eines Fahrpedals durch den Fahrzeugführer abhängig.

Das Zahnräderwechselgetriebe 19 ist als ein sogenanntes Zwei-Gruppengetriebe ausgeführt. Drehfest verbunden mit der Getriebeeingangswelle 11 ist ein Vorschaltgetriebe in Form einer Splitgruppe 17 angeordnet. Der Splitgruppe 17 nachgeordnet ist ein Hauptgetriebe 18.

Mittels der Splitgruppe 17 kann die Getriebeeingangswelle 11 über zwei verschiedene Zahnradpaarungen 20, 21 mit einer parallel zur Getriebeeingangswelle 11 angeordneten Vorgelegewelle 22 in Wirkverbindung gebracht werden. Die Zahnradpaarungen 20, 21 weisen eine unterschiedliche Übersetzung auf. Auf der Vorgelegewelle 22 sind verdrehfest Festräder 23, 24, 25 für den 3., 2. und 1. Gang des Hauptgetriebes 18 angeordnet. Die Festräder 23, 24, 25 kämmen jeweils mit zugehörigen Losrädern 26, 27, 28, welche drehbar auf einer koaxial zur Getriebeeingangswelle 11 angeordneten Hauptwelle 29 angeordnet sind. Das Losrad 26 kann mittels einer Schiebemuffe 30, die Losräder 27 und 28 mittels einer Schiebemuffe 31 verdrehfest und formschlüssig mit der Hauptwelle 29 verbunden werden.

An der Vorgelegewelle 22 ist eine Synchronisiereinrichtung in Form einer Getriebebremse 52 angeordnet, welche von der Steuerungseinrichtung 49 ansteuerbar ist. Mittels der Getriebebremse 52 kann die Drehzahl der Vorgelegewelle 22 und damit auch die Drehzahl der Getriebeeingangswelle 11 gezielt verringert werden.

Eine Schiebemuffe 41 der Splitgruppe 17 und die Schiebemuffen 30, 31, 39 des Hauptgetriebes 18 sind jeweils mit Schaltstangen 42, 43, 44, 45 betätigbar. Damit kann eine formschlüssige Verbindung zwischen zugehörigen Schaltelementen und der Hauptwelle 29 hergestellt oder unterbrochen werden. Die Schaltstangen 42, 43, 44, 45 können mit einem Stellglied in Form eines Schaltaktors 48, welcher von der Steuerungseinrichtung 49 angesteuert wird, betätigt werden. Wenn kein Gang im Zahnräderwechselgetriebe 19 eingelegt ist, also kein Losrad formschlüssig mit der Hauptwelle 29 verbunden ist, dann befindet sich das Zahnräderwechselgetriebe 19 in einer sogenannten Neutralstellung.

Von der Hauptwelle 29 wird das gewandelte Drehmoment und die Drehzahl der Antriebsmaschine 14 mittels einer Antriebswelle 32 an ein Achsgetriebe 33 übertragen, welches in an sich bekannter Weise die Drehzahl in gleichen oder unterschiedlichen Anteilen über zwei Abtriebswellen 34, 35 an Antriebsräder 36, 37 überträgt.

Bei einem Gangwechsel von einem Ursprungsgang in einen Zielgang muß zuerst der Ursprungsgang ausgelegt werden. Da das Zahnräderwechselgetriebe 19 als ein unsynchronisiertes Getriebe ausgeführt ist, muß zumindest bei Rückschaltungen, um den Zielgang einlegen zu können, die Vorgelegewelle 22 und damit auch die Eingangswelle 11 mittels der Antriebsmaschine 14 bei geschlossener Kupplung 12 ungefähr auf die Synchrondrehzahl des Zielgangs eingestellt werden. Die Synchrondrehzahl ist erreicht, wenn das Losrad des Zielgangs und die Hauptwelle 29 die selbe Drehzahl aufweisen. Bei Hochschaltungen mit geöffneter Kupplung 12 kann die Vorgelegewelle 22 mittels der Getriebebremse 52 abgebremst und damit die Eingangswelle 11 synchronisiert werden.

Das Auslegen des Ursprungsgangs kann entweder bei geschlossener oder geöffneter Kupplung durchgeführt werden. Ein häufiges Öffnen und Schließen der Kupplung 12 führt dabei zu einem starken Verschleiß und damit zu hohen Kosten für einen Tausch der Kupplung und Ausfall des Kraftfahrzeugs während des Tauschs. Deshalb ist es das Ziel, einen möglichst hohen Anteil der Gangwechsel mit geschlossener Kupplung durchzuführen.

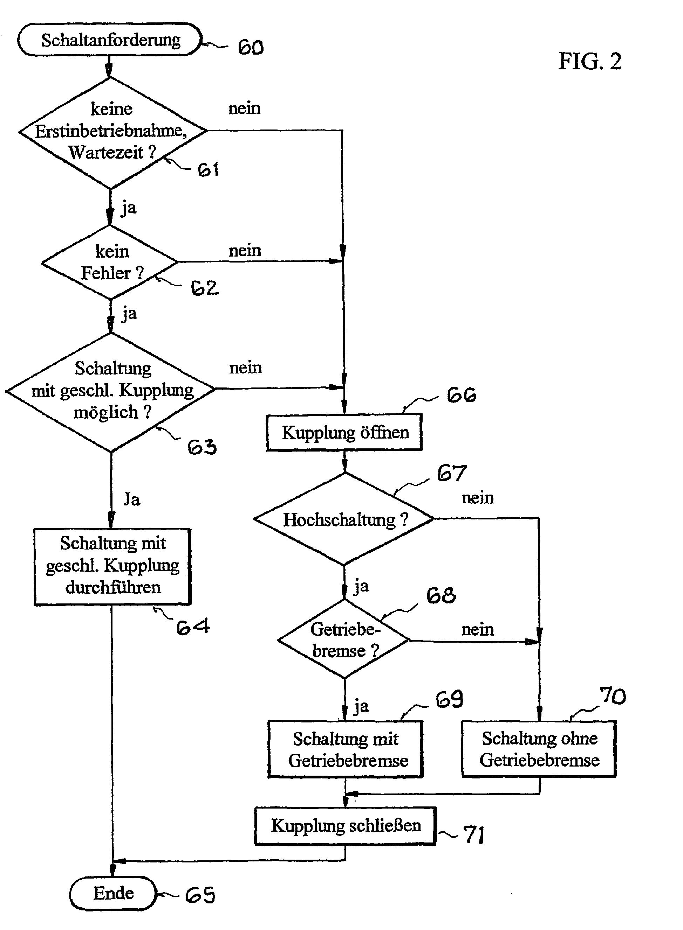

Dazu wird von der Steuerungseinrichtung 49 , wie im Ablaufdiagramm in Fig. 2 dargestellt, nach einer Schaltanforderung (Block 60) im nachfolgenden Block 61 geprüft, ob keine Erstinbetriebnahme des Antriebsstrangs 10 vorliegt und ob eine Zeitspanne nach einem Start der Antriebsmaschine 14 abgelaufen ist. Fällt die Prüfung positiv aus, so wird im Block 62 geprüft, ob bei keiner Komponente des Antriebsstrangs 10 eine Fehlfunktion erkannt wurde. Dazu werden Informationen von anderen Steuerungseinrichtung, beispielsweise der Steuerungseinrichtung 16, oder von anderen Programmteilen eines Steuerprogramms der Steuerungseinrichtung 49, welche Funktionen von Komponenten überwachen, ausgewertet. Fällt die Prüfung positiv aus, es liegt also kein Fehler vor, so wird in Block 63 geprüft, ob die Schaltung mit geschlossener Kupplung 12 durchgeführt werden kann. Dazu wird der Verlauf der Drehzahl der Getriebeeingangswelle 11 während der angeforderten Schaltung auf Grund der bekannten Fahrzeugparameter, der Betriebgrößen des Kraftfahrzeugs und der Umweltgrößen mittels an sich bekannten Bewegungsgleichungen vorausberechnet. Anschließend wird der vorausberechnete Verlauf mit den gespeicherten maximalen Gradienten der Drehzahl der Antriebsmaschine 14 verglichen und festgestellt, ob zum einen ein Auslegen des Ursprungsgangs und zum anderen eine Synchronisation der Drehzahl der Getriebeeingangswelle 11 auf die Synchrondrehzahl des Zielgangs möglich ist. Fällt die Prüfung positiv aus, so wird in Block 64 die Schaltung bzw. der Gangwechsel in an sich bekannter Weise bei geschlossener Kupplung 12 durchgeführt. Dazu wird mittels einer Änderung des abgegebenen Drehmoments der Antriebsmaschine 14 durch die Steuerungseinrichtung 16 das übertragene Drehmoment an den Schaltelementen des Ursprungsgangs so weit reduziert, daß der Ursprungsgang ausgelegt werden kann. Anschließend findet die Synchronisation mittels der Antriebsmaschine 14 statt. Sobald die Drehzahl der Getriebeeingangswelle 11 ungefähr die Synchrondrehzahl des Zielgangs erreicht hat, wird der Zielgang eingelegt. Anschließend wird an der Antriebsmaschine 14 wieder das Drehmoment eingestellt, welches der Fahrzeugführer mittels eines nicht dargestellten Fahrpedals vorgibt. Damit ist in Block 65 die Schaltung abgeschlossen.

Fällt die Prüfung in einem der Blöcke 61, 62, 63 negativ aus,
- liegt also eine Erstinbetriebnahme vor oder eine Zeitschwelle nach Start der Antriebsmaschine 14 ist noch nicht abgelaufen, oder
- wurde bei einer Komponente des Antriebsstrangs 10 eine Fehlfunktion festgestellt oder
- ist die Schaltung nicht mit geschlossener Kupplung 12 durchführbar,
so wird in Block 66 die Kupplung 12 durch Ansteuerung von der Steuerungseinrichtung 49 geöffnet. Anschließend wird in Block 67 geprüft, ob eine Hochschaltung ausgeführt werden soll. Ist dies der Fall so wird in Block 68 anhand von den in Block 63 vorausberechneten Verläufen geprüft, ob die Getriebebremse 52 aktiviert, die Vorgelegewelle 22 und damit auch die Getriebeeingangswelle 11 aktiv abgebremst werden sollen. Fällt die Prüfung positiv aus, so wird in Block 69 die Schaltung in an sich bekannter Weise mit Aktivierung der Getriebebremse 52 durchgeführt. Dazu wird der Ursprungsgang ausgelegt, die Synchronisation mit Unterstützung durch die Getriebebremse 52 durchgeführt und anschließend der Zielgang eingelegt.

Fällt die Prüfung in Block 67 oder 68 negativ aus, es soll also eine Rückschaltung oder eine Hochschaltung ohne Aktivierung der Getriebebremse 52 ausgeführt werden, so wird Block 70 die Schaltung in an sich bekannter Weise ohne Aktivierung der Getriebebremse 52 ausgeführt.

Anschließend an die Blöcke 69 oder 70, wenn also der Zielgang eingelegt ist, wird in Block 71 die Kupplung 12 wieder geschlossen und an der Antriebsmaschine 14 wieder das vom Fahrzeugführer vorgegebene Drehmoment eingestellt. Damit ist ebenfalls in Block 65 die Schaltung abgeschlossen.

Das Verfahren kann auch ohne die Blöcke 61 und / oder 62 durchgeführt werden.

Damit ergibt sich ein Verfahren zur Steuerung eines Antriebsstrangs eines Kraftfahrzeugs, wobei der Antriebsstrang 10 über eine Antriebsmaschine 14, ein automatisiertes Zahnräderwechselgetriebe 19, eine zwischen der Antriebsmaschine 14 und dem Zahnräderwechselgetriebe 19 angeordnete, automatisierte Kupplung 12 und wenigstens eine Steuerungseinrichtung 49 verfügt und Gangwechsel von einem Ursprungsgang in einen Zielgang des Zahnräderwechselgetriebes 19 mit geschlossener Kupplung 12 durchgeführt werden, wobei eine Synchronisation einer Drehzahl einer Getriebeeingangswelle 11 auf eine Zieldrehzahl im Zielgang mittels einer Beeinflussung der Antriebsmaschine 14 erfolgt, dadurch gekennzeichnet, daß das Zahnräderwechselgetriebe 19 über eine von der Steuerungseinrichtung 49 ansteuerbare Synchronisiereinrichtung (Getriebebremse 52) verfügt, mittels welcher eine Getriebeeingangswelle 11 abgebremst werden kann und die Steuerungseinrichtung 49 bei Hochschaltungen mit geöffneter Kupplung 12 auswählt, ob die Synchronisiereinrichtung (Getriebebremse 52) angesteuert und damit die Getriebeeingangswelle 11 abgebremst wird oder ob eine Ansteuerung unterbleibt.

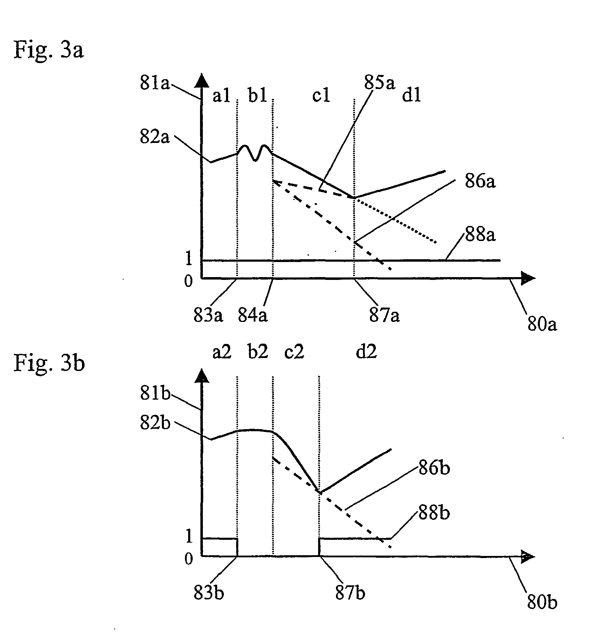

In den Fig. 3a und 3b ist der zeitliche Verlauf von Betriebsgrößen des Kraftfahrzeugs bei einer Hochschaltung des Zahnräderwechselgetriebes 19 von einem Ursprungs- in einen Zielgang dargestellt. Mittels dieser Verläufe wird die Durchführbarkeit von Hochschaltungen bei geschlossener Kupplung näher erläutert.

In den Fig. 3a und 3b sind auf Abszissen 80a, 80b die Zeit, auf Ordinaten 81a, 81b eine Drehzahl bzw. ein Kupplungsstatus aufgetragen.

In einer Phase a1 in Fig. 3a ist der Ursprungsgang noch eingelegt. Die Antriebsmaschine 14 gibt ein konstantes Drehmoment ab und das Kraftfahrzeug beschleunigt, so daß die Drehzahl der Antriebsmaschine 14 (Linie 82a) ansteigt. Zum Zeitpunkt 83a fordert der Fahrzeugführer mittels der Bedieneinheit 51 eine Hochschaltung an. In der Phase b1 verringert die Antriebsmaschine 14 das abgegebene Drehmoment (nicht dargestellt), damit der Ursprungsgang ausgelegt werden kann. Dies bewirkt eine Schwankung der Drehzahl der Antriebsmaschine 14 in der Phase b1. Am Ende der Phase b1, zum Zeitpunkt 84a ist der Ursprungsgang ausgelegt, das Zahnräderwechselgetriebe 19 befindet sich damit in einer Neutralstellung. In der Phase c1 sinkt die Drehzahl der Antriebsmaschine 14 aufgrund der Motorbremswirkung ab.

Die Synchrondrehzahl des Zielgangs ist wie beschrieben proportional zur Geschwindigkeit des Kraftfahrzeugs. Die Linien 85a und 86a zeigen den Verlauf der Synchrondrehzahl in zwei verschiedenen Fällen. Im ersten Fall (Linie 85a) sinkt die Synchrondrehzahl nur langsam ab. Dies kann beispielsweise darin begründet sein, daß die Fahrbahn leicht abschüssig ist. Zum Zeitpunkt 87a erreicht die Drehzahl der Antriebsmaschine 14 die Synchrondrehzahl (die Linien 82a und 85a treffen sich). Damit kann der Zielgang eingelegt und das vom Fahrzeugführer angeforderte Drehmoment eingestellt werden. Die Schaltung ist damit abgeschlossen und das Kraftfahrzeug beschleunigt wieder, die Drehzahl der Antriebsmaschine 14 steigt in der Phase d1 wieder an. Die Kupplung 12 bleibt dabei während des gesamten Schaltvorgangs geschlossen (Linie 88a, Zustand 1).

Im zweiten Fall (Linie 86a) sinkt die Synchrondrehzahl sehr stark ab. Dies kann beispielsweise darin begründet sein, daß die Fahrbahn ansteigt und / oder das Fahrzeug stark beladen ist und / oder der Fahrbahnuntergrund sehr weich ist. Die Synchrondrehzahl fällt schneller ab als die Drehzahl der Antriebsmaschine 14. Damit kann die Drehzahl der Antriebsmaschine 14 die Synchrondrehzahl nicht erreichen, der Zielgang kann nicht eingelegt werden. Damit kann die Schaltung nicht mit geschlossener Kupplung 12 durchgeführt werden.

Bei der Prüfung, ob die Schaltung mit geschlossener Kupplung 12 durchgeführt werden kann (Block 63 in Fig. 2), werden diese Verläufe der Drehzahlen vorausberechnet und geprüft, ob die Drehzahl der Antriebsmaschine 14 die Synchrondrehzahl erreicht oder nicht. Falls dies nicht der Fall ist, kann die Schaltung nicht mit geschlossener Kupplung 12 durchgeführt werden.

In Fig. 3b ist noch einmal der zweite Fall dargestellt, mit dem Unterschied, daß bei dem dargestellten Gangwechsel die Kupplung 12 geöffnet wird. In der Phase a2 ist die Kupplung 12 geschlossen (Zustand 1, Linie 88b). Mit der Schaltanforderung (Zeitpunkt 83b) wird der Verlauf der Drehzahlen vorausberechnet und festgestellt, daß die Schaltung nur mit geöffneter Kupplung 12 ausgeführt werden kann. Demzufolge wird die Kupplung 12 sofort geöffnet (Zustand 0). In der Phase b2 wird der Ursprungsgang ausgelegt und in der Phase c2 wird die Drehzahl der Antriebsmaschine 14 (Linie 82b) mittels der Getriebebremse 52 abgebremst. Damit erreicht zum Zeitpunkt 87b die Drehzahl der Antriebsmaschine 14 die Synchrondrehzahl, der Zielgang kann eingelegt und die Kupplung 12 geschlossen werden. Die Schaltung ist damit abgeschlossen und das Kraftfahrzeug beschleunigt in der Phase d2 wieder. Die Schaltung kann damit mit geöffneter Kupplung durchgeführt werden.

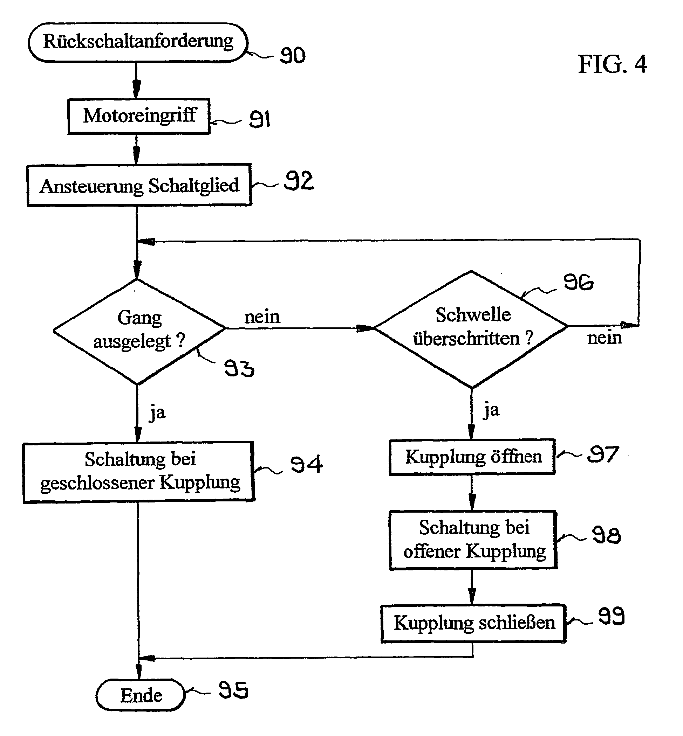

In Fig. 4 ist ein Ablaufdiagramm einer Rückschaltung entsprechend einer zweiten Ausführungsform dargestellt. Nach einer Rückschaltanforderung (Block 90) wird in Block 91 das abgegebene Drehmoment der Antriebsmaschine 14 wie bei einer Schaltung mit geschlossener Kupplung 12 verändert, so daß der Ursprungsgang auslegbar sein müßte. Im folgenden Block 92 wird der Schaltaktor 48 zum Auslegen des Ursprungsgangs angesteuert. Anschließend wird im Block 93 geprüft, ob der Ursprungsgang ausgelegt wurde. Ist dies der Fall so wird im Block 94 die Schaltung mit geschlossener Kupplung durchgeführt und die Rückschaltung ist im Block 95 beendet. Falls die Prüfung in Block 93 negativ ausfällt, der Ursprungsgang also nicht ausgelegt wurde, wird im Block 96 geprüft, ob die Zeit seit Ansteuerung des Schaltaktors 48 eine Schwelle überschritten hat. Ist dies nicht der Fall, so wird der Block 93 wiederholt. Ist die Schwelle in Block 96 überschritten, so wird in Block 97 die Kupplung geöffnet, in Block 98 die Schaltung mit geöffneter Kupplung durchgeführt und in Block 99 die Kupplung wieder geschlossen. Damit ist die Schaltung ebenso im Block 95 abgeschlossen.

Die genannte Zeitschwelle im Block 96 kann dabei von Fahrzeugparametern des Kraftfahrzeugs, beispielsweise dem Fahrzeuggewicht, und / oder von Betriebsgrößen des Kraftfahrzeugs, beispielsweise Drehzahl der Antriebsmaschine 14, und / oder von Größen, welche die Umwelt des Kraftfahrzeugs beschreiben, beispielsweise der Neigung der Fahrbahn, abhängig sein.

Das in Fig. 4 dargestellte Verfahren wird durchgeführt, wenn der Gangwechsel bei geschlossener Kupplung durchgeführt werden soll.

Außerdem ist es möglich, unabhängig davon, ob eine Erstinbetriebnahme und / oder ein Start der Antriebsmaschine und / oder eine erkannte Fehlfunktion vorliegt, das Verfahren durchzuführen. Damit ergibt sich ein Verfahren zur Steuerung eines Antriebsstrangs eines Kraftfahrzeugs, wobei der Antriebsstrang 10 über eine Antriebsmaschine 14, ein automatisiertes Zahnräderwechselgetriebe 19, eine zwischen der Antriebsmaschine 14 und dem Zahnräderwechselgetriebe 19 angeordnete, automatisierte Kupplung 12 und wenigstens eine Steuerungseinrichtung 49 verfügt und Gangwechsel von einem Ursprungsgang in einen Zielgang des Zahnräderwechselgetriebes 19 mit geschlossener Kupplung 12 durchgeführt werden, wobei eine Synchronisation einer Drehzahl einer Getriebeeingangswelle 11 auf eine Zieldrehzahl im Zielgang mittels einer Beeinflussung der Antriebsmaschine 14 erfolgt, dadurch gekennzeichnet, daß beim Beginn von Rückschaltungen die Kupplung 12 geschlossen bleibt und die Steuerungseinrichtung 49 ein Stellglied (Schaltaktor 48) zum Auslegen des Ursprungsgangs ansteuert, eine Zeit seit Ansteuerung des Stellglieds (Schaltaktor 48) ermittelt, überwacht, ob der Ursprungsgang ausgelegt wird und, falls die ermittelte Zeit eine Schwelle überschreitet, ohne daß der Ursprungsgang ausgelegt wurde, die Kupplung 12 geöffnet wird.

Die genannte Schwelle kann von Fahrzeugparametern des Kraftfahrzeugs und / oder von Betriebsgrößen des Kraftfahrzeugs und / oder von Größen, welche die Umwelt des Kraftfahrzeugs beschreiben, abhängig sein.

## Patentansprüche

1. Verfahren zur Steuerung eines Antriebsstrangs eines Kraftfahrzeugs, wobei der Antriebsstrang (10) über
- eine Antriebsmaschine (14),
- ein automatisiertes Zahnräderwechselgetriebe (19),
- eine zwischen der Antriebsmaschine (14) und dem Zahnräderwechselgetriebe (19) angeordnete, automatisierte Kupplung (12) und
- wenigstens eine Steuerungseinrichtung (49) verfügt,
wobei
- die Steuerungseinrichtung (49) in Abhängigkeit von Auswahlregeln und von Fahrzeugparametern und / oder Betriebsgrößen des Kraftfahrzeugs eine Auswahl vornimmt, ob bei einem Gangwechsel von einem Ursprungsgang in einen Zielgang des Zahnräderwechselgetriebes (19) die Kupplung (12) geöffnet wird oder geschlossen bleibt, und
- bei einem Gangwechsel bei geschlossener Kupplung (12) eine Synchronisation einer Drehzahl einer Getriebeeingangswelle (11) auf eine Zieldrehzahl im Zielgang mittels einer Beeinflussung der Antriebsmaschine (14) erfolgt,
**dadurch gekennzeichnet , daß**
- bis zum Ablauf einer fest vorgegebenen Zeitspanne nach einer Erstinbetriebnahme des Antriebsstrangs (10) und / oder
- bei einer erkannten Fehlfunktion einer Komponente des Antriebsstrangs (10)
Gangwechsel ausschließlich mit geöffneter Kupplung (12) durchgeführt werden.

2. Verfahren nach Anspruch 1,
**dadurch gekennzeichnet , daß**
- die Steuerungseinrichtung (49) in Abhängigkeit von Prüfregeln eine Prüfung vornimmt, ob der Gangwechsel bei geschlossener Kupplung (12) durchführbar ist und
- die Auswahl vom Ergebnis der Prüfung abhängig ist.

3. Verfahren nach Anspruch 2,
**dadurch gekennzeichnet , daß**
die Prüfung in Abhängigkeit von Fahrzeugparametern und / oder Betriebsgrößen des Kraftfahrzeugs durchführbar ist.

4. Verfahren nach einem der Ansprüche 1 bis 3,
**dadurch gekennzeichnet , daß**
die Auswahl und / oder die Prüfung zumindest in Teilbetriebsbereichen in Abhängigkeit vom Zielgang des Zahnräderwechselgetriebes (19) durchgeführt werden.

5. Verfahren nach einem der Ansprüche 1 bis 4,
**dadurch gekennzeichnet , daß**
die Auswahl und / oder die Prüfung zumindest in Teilbetriebsbereichen in Abhängigkeit von Größen, welche die Umwelt des Kraftfahrzeugs beschreiben, durchgeführt werden.

6. Verfahren nach Anspruch 1 oder 2,
**dadurch gekennzeichnet , daß**
die Fahrzeugparameter veränderbar sind.

7. Verfahren nach Anspruch 1,
**dadurch gekennzeichnet , daß**
das Zahnräderwechselgetriebe (19) über eine von der Steuerungseinrichtung (49) ansteuerbare Synchronisiereinrichtung (Getriebebremse 52) verfügt, mittels welcher eine Getriebeeingangswelle (11) abgebremst werden kann und die Steuerungseinrichtung (49) bei Hochschaltungen mit geöffneter Kupplung (12) auswählt, ob die Synchronisiereinrichtung (Getriebebremse 52) angesteuert und damit die Getriebeeingangswelle (11) abgebremst wird oder ob eine Ansteuerung unterbleibt.

8. Verfahren nach Anspruch 1,
**dadurch gekennzeichnet , daß**
beim Beginn von Rückschaltungen die Kupplung (12) geschlossen bleibt und die Steuerungseinrichtung (49)
- ein Stellglied (Schaltaktor 48) zum Auslegen des Ursprungsgangs ansteuert,
- eine Zeit seit Ansteuerung des Stellglieds (Schaltaktor 48) ermittelt,
- überwacht, ob der Ursprungsgang ausgelegt wird und,
- falls die ermittelte Zeit eine Schwelle überschreitet, ohne daß der Ursprungsgang ausgelegt wurde, die Kupplung (12) geöffnet wird.

9. Verfahren nach Anspruch 8,
**dadurch gekennzeichnet , daß**
die genannte Schwelle
- von Fahrzeugparametern des Kraftfahrzeugs und / oder
- von Betriebsgrößen des Kraftfahrzeugs und / oder
- von Größen, welche die Umwelt des Kraftfahrzeugs beschreiben,
abhängig ist.

## Claims

1. Method for controlling a drivetrain of a motor vehicle, the said drivetrain (10) comprising
- a drive engine (14),
- an automated gear-change transmission (19),
- an automated clutch (12) arranged between the drive engine (14) and the gear-change transmission (19), and
- at least one control device (49),
such that
- as a function of selection rules and vehicle parameters and/or operating parameters of the vehicle the control device (49) selects whether, during a gear shift from an original gear to a target gear of the gear-change transmission (19) the clutch (12) is opened or remains closed, and
- during a gear shift with the clutch (12) closed, the speed of a transmission input shaft (11) is synchronised with a target speed in the target gear by influencing the drive engine (14),
**characterised in that**
- until the lapse of a fixed, specified time interval after the drivetrain (10) has first been started, and/or
- in the event that a malfunction of a component of the drivetrain (10) is detected, gear shifts are carried out exclusively with the clutch (12) open.

2. Method according to Claim 1,
**characterised in that**
- as a function of testing rules the control device (49) checks whether the gear shift can be carried out with the clutch (12) closed, and
- the selection depends on the result of the said check.

3. Method according to Claim 2,
**characterised in that**
the check can be carried out as a function of vehicle parameters and/or operating magnitudes of the motor vehicle.

4. Method according to any of Claims 1 to 3,
**characterised in that**
the selection and/or the check is/are carried out at least in partial operating ranges as a function of the target gear of the gear-change transmission (19).

5. Method according to any of Claims 1 to 4,
**characterised in that**
the selection and/or the check is/are carried out at least in partial operating ranges as a function of magnitudes that describe the environment of the motor vehicle.

6. Method according to Claims 1 or 2,
**characterised in that**
the vehicle parameters can be varied.

7. Method according to Claim 1,
**characterised in that**
the gear-change transmission (19) comprises a synchronising device (transmission brake 52) that can be controlled by the control device (49), by means of which a transmission input shaft (11) can be braked, and during upshifts with the clutch (12) open the control device (49) selects whether the said synchronising device (transmission brake 52) is actuated so that the transmission input shaft (11) is braked, or whether no such actuation takes place.

8. Method according to Claim 1,
**characterised in that**
at the beginning of downshifts the clutch (12) remains closed and the control device (49)
- actuates a control element (shift actuator 48) to disengage the original gear,
- determines a time since the actuation of the said control element (shift actuator 48),
- checks whether the original gear has been disengaged, and
- if the time determined exceeds a threshold value without the original gear having been disengaged, opens the clutch (12).

9. Method according to Claim 8,
**characterised in that**
the said threshold value depends on
- vehicle parameters of the motor vehicle, and/or
- operating magnitudes of the motor vehicle, and/or
- magnitudes that describe the environment of the motor vehicle.

## Revendications

1. Procédé pour commander un train d'entraînement d'un véhicule automobile, dans lequel le train d'entraînement (10) comprend
- un moteur d'entraînement (14),
- une boîte de vitesses à engrenages automatique (19),
- un embrayage (12) automatique agencé entre le moteur d'entraînement (14) et la boîte de vitesses (19), et
- au moins un dispositif de commande (49), dans lequel
- le dispositif d'entraînement (49) procède, en fonction de règles de sélection et de paramètres liés au véhicule et/ou de grandeurs de fonctionnement du véhicule automobile, à un choix quant à savoir, lors d'un changement de vitesses depuis une vitesse initiale vers une vitesse cible de la boîte de vitesses (19), si l'embrayage (12) sera ouvert ou reste fermé, et
- lors d'un changement de vitesse alors que l'embrayage (12) est fermé, il se produit une synchronisation d'un régime de rotation d'un arbre d'entrée (11) de la boîte de vitesses vers un régime de rotation cible dans la vitesse cible au moyen d'une influence sur le moteur d'entraînement (14),
**caractérisé en ce que** :
- jusqu'à écoulement d'une période temporelle fixe prédéterminée après première mise en service du train d'entraînement (10), et/ou
- lors de la reconnaissance d'un dysfonctionnement d'un composant du train d'entraînement (10), des changements de vitesses sont exclusivement exécutés avec embrayage ouvert (12).

2. Procédé selon la revendication 1,
**caractérisé en ce que**
- le dispositif de commande (49) procède, en fonction de règles de vérification, à une vérification pour savoir si le changement de vitesses peut être exécuté à embrayage fermé (12), et
- le choix dépend du résultat de la vérification.

3. Procédé selon la revendication 2,
**caractérisé en ce que** la vérification peut être exécutée en fonction de paramètres liés au véhicule et/ou de grandeurs de fonctionnement du véhicule automobile.

4. Procédé selon l'une des revendications 1 à 3,
**caractérisé en ce que** la sélection et/ou la vérification sont exécutées au moins dans des plages de fonctionnement partiel en fonction de la vitesse cible de la boîte de vitesses (19).

5. Procédé selon l'une des revendications 1 à 4,
**caractérisé en ce que** la sélection et/ou la vérification sont exécutés au moins dans des plages de fonctionnement partiel en fonction de grandeurs qui décrivent l'environnement du véhicule automobile.

6. Procédé selon la revendication 1 ou 2,
**caractérisé en ce que** les paramètres liés au véhicule sont modifiables.

7. Procédé selon la revendication 1,
**caractérisé en ce que** la boîte de vitesses (19) dispose d'un dispositif de synchronisation (frein de boîte 52) pilotable par le dispositif de commande (49), au moyen duquel un arbre d'entrée (11) de la boîte de vitesses peut être freiné, et lors d'un changement de vitesses montant avec embrayage ouvert (12), le dispositif de commande (49) choisit pour savoir si le dispositif de synchronisation (frein de boîte 52) est piloté et l'arbre d'entrée (11) de la boîte est freiné, ou si un pilotage n'a pas lieu.

8. Procédé selon la revendication 1,
**caractérisé en ce que** lors du commencement de changements de vitesse descendants, l'embrayage (12) reste fermé et le dispositif de commande (49)
- pilote un organe de positionnement (actionneur de commutation 48) pour découpler la vitesse d'origine,
- détermine une durée depuis le pilotage de l'organe de positionnement (actionneur de commutation 48),
- surveille si la vitesse d'origine a été découplée, et
- si la durée est déterminée dépasse un seuil, sans que la vitesse d'origine ait été découplée, l'embrayage (12) est ouvert.

9. Procédé selon la revendication 8,
**caractérisé en ce que** ledit seuil dépend :
- de paramètres liés au véhicule automobile, et/ou
- de grandeurs de fonctionnement du véhicule automobile, et/ou
- de grandeurs qui décrivent l'environnement du véhicule automobile.
